# EUROPÄISCHE PATENTSCHRIFT

(11) **EP 2 931 575 B1**
(45) Veröffentlichungstag und Bekanntmachung des Hinweises auf die Patenterteilung: **22.02.2017**
(21) Anmeldenummer: 13802992.1
(22) Anmeldetag: 11.12.2013
(51) Int. Cl.: B60T 8/36, B60T 8/44

(54) **VERFAHREN ZUM BETREIBEN EINES BREMSSYSTEMS UND BREMSSYSTEM, WORIN DAS VERFAHREN DURCHGEFÜHRT WIRD**
METHOD FOR OPERATING A BRAKE SYSTEM, AND BRAKE SYSTEM IN WHICH THE METHOD IS CARRIED OUT
PROCÉDÉ POUR FAIRE FONCTIONNER UN SYSTÈME DE FREINAGE ET SYSTÈME DE FREINAGE METTANT EN OEUVRE CE PROCÉDÉ

(30) Priorität: 14.12.2012 DE 102012223296
(43) Veröffentlichungstag der Anmeldung: 21.10.2015
(73) Patentinhaber: Continental Teves AG & Co. oHG, 60488 Frankfurt am Main (DE)
(72) Erfinder: ULLRICH, Thorsten, 64579 Gernsheim (DE); PEICHL, Thomas, 61206 Wöllstadt (DE); SCHMIDT, Robert, 65779 Kelkheim (DE)
(86) Internationale Anmeldenummer: PCT/EP2013/076298
(87) Internationale Veröffentlichungsnummer: WO 2014/090910

(56) Entgegenhaltungen:
- EP-A2- 0 967 131
- EP-A2- 1 120 323
- WO-A1-96/14227
- WO-A1-03/068574
- WO-A1-2010/015329
- DE-A1- 10 026 365
- DE-A1- 19 925 794

## Beschreibung

Die Erfindung betrifft ein Verfahren gemäß Oberbegriff von Anspruch 1 und ein Bremssystem gemäß Oberbegriff von Anspruch 8.

Moderne Kraftfahrzeuge weisen vielfach einen Unterdruckbremskraftverstärker mit mindestens zwei durch eine Membran getrennten Kammern auf, welcher der vom Fahrer auf das Bremspedal ausgeübten Betätigungskraft eine mittels einer Druckdifferenz zwischen den Kammern aufgebaute Hilfskraft überlagert. Die resultierende Gesamtkraft wirkt auf einen Hauptbremszylinder, der einen Druckaufbau und damit eine Bremskraft in den Radbremsen des Fahrzeugs verursacht. Zwischen Gesamtkraft und Betätigungskraft besteht dabei ein Verstärkungsfaktor von z.B. 4:1, so dass auch schwere Fahrzeuge mit moderaten Betätigungskräften abgebremst werden können. Da der als Energiequelle dienende Unterdruck bzw. die Druckdifferenz mit jeder Betätigung abnimmt, wird der Unterdruckbremskraftverstärker meist mit Hilfe des Ansaugtrakts eines Verbrennungsmotors evakuiert. Bei modernen Verbrennungsmotoren mit einer Direkteinspritzung und/oder Turboaufladung ist ein hinreichender Unterdruck im Ansaugtrakt nicht in jedem Betriebszustand gewährleistet, insbesondere nicht in einer gewissen Zeitspanne nach einem Kaltstart des Verbrennungsmotors.
Aus der EP 0 754 607 B1 ist eine Bremsanlage für Kraftfahrzeuge mit einem Bremskraftverstärker bekannt, der eine Ausgangsbremskraft durch die Überlagerung der Betätigungskraft mit einer Hilfskraft erzeugt, und mit einem hydraulischen Radbremskraftregelsystem, durch das in den Radbremszylindern ein höherer als der durch die Ausgangsbremskraft eingesteuerte Druck erzeugbar ist. In der Bremsanlage sind eine Auswertevorrichtung, die das Unterschreiten eines vorgegebenen Verhältnisses der Hilfskraft zur Betätigungskraft erkennt, und eine Steuervorrichtung vorgesehen, die nach Unterschreiten dieses Verhältnisses mittels des hydraulischen Radbremsregelsystems einen Solldruck in den Radbremszylindern erzeugt, der die Auswirkungen auf den Ist-Druck durch die im Verhältnis zur Betätigungskraft abnehmende Hilfskraft zumindest teilweise kompensiert.

Wenn die Hilfskraft nicht mehr in einem vorgegebenen Verhältnis zur Betätigungskraft steht bzw. eine Erhöhung des Bremsdrucks nur noch durch die vom Fahrer aufgebrachte Betätigungskraft erfolgt, so ist der Aussteuerpunkt des Bremskraftverstärkers erreicht. Der Aussteuerpunkt ist von der konstruktiven Auslegung des Bremssystems und dem verfügbaren Unterdruck abhängig. Auch bei einem Defekt des Unterdruckbremskraftverstärkers ist eine Unterstützung des Fahrers durch einen zusätzlichen hydraulischen Druckaufbau beispielsweise mittels einer elektrischen Hydraulikpumpe wünschenswert.

Die WO 03/068574 A1 offenbart ein Verfahren zum Einregeln eines vorgegebenen veränderlichen Bremsdruckes in den Radbremsen einer Bremsanlage, bei dem in einem Regelungs- und/oder Datenverarbeitungssystem den Bremsdruck in den einzelnen Radbremsen bestimmende Eingangsgrößen ausgewertet und Stellgrößen von Hydraulikventilen festgelegt werden. In dem Regelungs- oder Datenverarbeitungssystem ist eine Kennlinie hinterlegt, die den Ventilstrom des Hydraulikventils mit einer Druckdifferenz des Hydraulikventils korreliert, und nach Maßgabe der Kennlinie wird ein elektrischer Ventilstrom festgelegt, mittels dem das Hydraulikventil analog gesteuert wird. Der elektrische Ventilstrom wird zweckmäßigerweise anhand der Druckdifferenz zwischen dem Solldruck für die Radbremsen und dem Druck einer Betätigungseinrichtung bestimmt. Der Druck der Betätigungseinrichtung (dem Tandemhauptbremszylinder) wird über einen in einem Bremskreis angeordneten Drucksensor ermittelt.

Ein Verfahren nach dem Oberbegriff des Anspruchs 1 ist aus der EP 1120323 A2 bekannt. Der maximal mögliche, vom Bremskraftverstärker aufgebrachte Druck ist als Festwert angenommen worden.

Aufgabe der vorliegenden Erfindung ist es, ein Verfahren zum Betreiben eines Bremssystems bzw. ein Bremssystem anzugeben, welches eine nachlassende Hilfskraftunterstützung eines Unterdruckbremskraftverstärkers kompensiert, ohne auf eine Messung des Drucks im Hauptbremszylinder angewiesen zu sein.

Diese Aufgabe wird durch ein Verfahren gemäß Anspruch 1 bzw. ein Bremssystem gemäß Anspruch 8 gelöst.

Es wird also ein Verfahren zum Betreiben eines Bremssystems bereitgestellt, welches einen vom Fahrer mit Hilfe eines Bremskraftverstärkers betätigbaren Hauptbremszylinder, eine fahrerunabhängige Druckquelle und mindestens eine Radbremse umfasst, der ein Raddrehzahlsensor zugeordnet ist. Erfindungsgemäß wird bei einer Bremsung durch den Fahrer, welche insbesondere mittels eines Bremslichtschalters und/oder eines Pedalwegsensors am Bremspedal erkennbar ist, die aktuelle Fahrzeugverzögerung ermittelt und mit einem vorgegebenen Schwellenwert verglichen. Die mindestens eine fahrerunabhängige Druckquelle wird aktiviert, sobald die ermittelte Fahrzeugverzögerung den Schwellenwert erreicht oder überschreitet. Der Pedalwegsensor kann hierbei auch als Pedalwinkelsensor oder als Wegsensor an Tandemhauptzylinder oder Membran des Bremskraftverstärkers ausgeführt sein.

Das erfindungsgemäße Verfahren überprüft dabei anhand der aktuellen Fahrzeugverzögerung, ob von einer Bremsung oberhalb des Aussteuerpunkts (also mit einer Verzögerung oberhalb des Schwellenwerts) auszugehen ist. Dann wird der Fahrer mit einem hydraulischen Druckaufbau unterstützt. Somit steht eine ausreichende Bremskraft auch bei unzureichendem Vakuum (d.h. zu hohem Luftdruck) im Bremskraftverstärker bereit, ohne dass ein Drucksensor im Bremskreis bzw. Bremssystem erforderlich ist.

Erfindungsgemäß wird der vorgegebene Schwellenwert anhand des gemessenen Absolutdrucks in einer Unterdruckkammer des Bremskraftverstärkers oder anhand eines Differenzdrucks zwischen Unterdruckkammer und Umgebung ermittelt, wobei insbesondere der Zusammenhang zwischen gemessenem Absolut- oder Differenzdruck und vorgegebenem Schwellenwert aus einer in einem elektronischen Steuergerät gespeicherten Kennlinie bestimmt wird. Aus dem gemessenen Druck im Bremskraftverstärker und der Auslegung bzw. den geometrischen Abmessungen kann die am Aussteuerpunkt zur Verfügung stehende Bremsverzögerung bei einer angenommenen Beladung vorab ermittelt werden, wie insbesondere einer dem maximal zulässigen Gesamtgewicht entsprechenden Beladung. Dieser Zusammenhang kann z.B. in Form einer Kennlinie gespeichert und bei der Ansteuerung des Bremssystems berücksichtigt werden. Sofern das Fahrzeug über eine Beladungserkennung z.B. anhand einer Kräftebilanz beim Beschleunigen verfügt, kann die Verzögerung am Aussteuerpunkt bzw. allgemein die Kennlinie anhand der ermittelten Fahrzeugmasse korrigiert werden.

Bevorzugt wird die aktuelle Fahrzeugverzögerung aus den Signalen mindestens eines Raddrehzahlsensors ermittelt. Diese Sensoren werden auch für eine Bremsschlupfregelung benötigt und sind daher meist ohnehin vorhanden.

Besonders bevorzugt weist das Bremssystem einen Längsbeschleunigungssensor auf, und die Ermittlung der aktuellen Fahrzeugverzögerung umfasst eine Korrektur der aus Signalen von Raddrehzahlsensoren ermittelten Fahrzeugverzögerung um einen durch eine Längsneigung der Fahrbahn verursachten Anteil. Somit kann die Bremsbetätigung durch den Fahrer um den Einfluss z.B. einer Fahrt auf einen Berg korrigiert werden.

Es ist vorteilhaft, wenn zwischen Hauptbremszylinder und Radbremsen ein erstes Magnetventil angeordnet ist, welches insbesondere stromlos geöffnet ist, und wenn das erste Magnetventil analog angesteuert werden kann, um einen vorgegebenen Differenzdruck zwischen Hauptbremszylinder und Radbremsen aufrecht zu halten. Indem das erste Magnetventil, insbesondere ein Trennventil, bei Überschreiten des Differenzdrucks öffnet und somit der maximale Druck in den Radbremsen begrenzt wird, kann auf eine Druckmessung in den Radbremsen verzichtet werden. Diese Überströmregelung des Trennventils, bei der ein vorgegebener Differenzdruck zwischen Radbremse und Hauptzylinder eingestellt wird, ermöglicht eine Überlagerung des vom Fahrer aufgebauten Bremsdrucks mit einer fahrerunabhängigen Druckquelle. Somit ist ein hinsichtlich Fahrkomfort und Sicherheit überzeugendes Bremsverhalten gewährleistet.

Besonders vorteilhaft ist es, wenn die fahrerunabhängige Druckquelle eine elektrische Hydraulikpumpe umfasst, die auslassseitig mit der oder den Radbremsen verbunden ist und einlassseitig über ein zweites Magnetventil, welches insbesondere stromlos geschlossen ist, mit dem Hauptbremszylinder verbunden werden kann, und eine Aktivierung der fahrerunabhängigen Druckquelle ein zumindest teilweises Schließen des ersten Magnetventils und ein Öffnen des zweiten Magnetventils umfasst. Beispielsweise kann die Drehzahl der hydraulischen Pumpe nach Maßgabe der gewünschten Druckdifferenz gewählt werden.

Insbesondere wird der vorgegebene Differenzdruck zwischen Hauptbremszylinder und Radbremsen nach Maßgabe der aktuellen Verzögerung gewählt. Wenn der Fahrer also stärker bremst, wird eine stärkere Hilfskraftkomponente durch die fahrerunabhängige Druckquelle aufgebaut. Das Bremsverhalten bleibt mit und ohne hinreichenden Unterdruck im Bremskraftverstärker konsistent.

Die Erfindung betrifft weiterhin ein Bremssystem für ein Kraftfahrzeug, das einen vom Fahrer mit Hilfe eines Bremskraftverstärkers betätigten Hauptbremszylinder, eine fahrerunabhängige Druckquelle, insbesondere eine elektrische Hydraulikpumpe, mindestens eine Radbremse, der ein Raddrehzahlsensor zugeordnet ist, und ein elektronisches Steuergerät mit einem Speicher und einer Recheneinheit umfasst, die ein Verfahren nach mindestens einem der vorhergehenden Ansprüche ausführt.

Zweckmäßigerweise ist das elektronische Steuergerät mit dem Bremslichtschalter verbunden und/oder weist einen Sensor zur Messung der Längsbeschleunigung auf. Hierbei kann es auch vorgesehen sein, den Bremslichtschalter redundant auszuführen, um eine sichere Erkennung einer Bremsung durch den Fahrer zu gewährleisten. Wenn ein Sensor zur Messung der Längsbeschleunigung vorhanden ist, kann der störende Einfluss einer Längssteigung der Fahrbahn kompensiert werden.

Vorzugsweise umfasst das elektronische Steuergerät ein zwischen Hauptbremszylinder und Radbremsen angeordnetes erstes Magnetventil, welches insbesondere stromlos geöffnet ist, eine elektrische Hydraulikpumpe, die auslassseitig mit der oder den Radbremsen verbunden ist, ein zweites Magnetventil, über welches die elektrische Hydraulikpumpe auf der Einlassseite mit dem Hauptbremszylinder verbunden werden kann und welches insbesondere stromlos geschlossen ist, sowie eine Ansteuerschaltung für das erste und das zweite Magnetventil, wobei insbesondere die Ansteuerschaltung für das erste Magnetventil Mittel zur Regelung eines Sollstroms aufweist. Dies ermöglicht eine Überströmregelung des Trennventils.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein beispielhaftes Bremssystem,
- Fig. 2: eine schematische Darstellung zur Berechnung der gewünschten Druckdifferenz zwischen Hauptbremszylinder und Radbremsen, und
- Fig. 3: den allgemeinen Zusammenhang zwischen Pedalkraft und Bremsverzögerung.

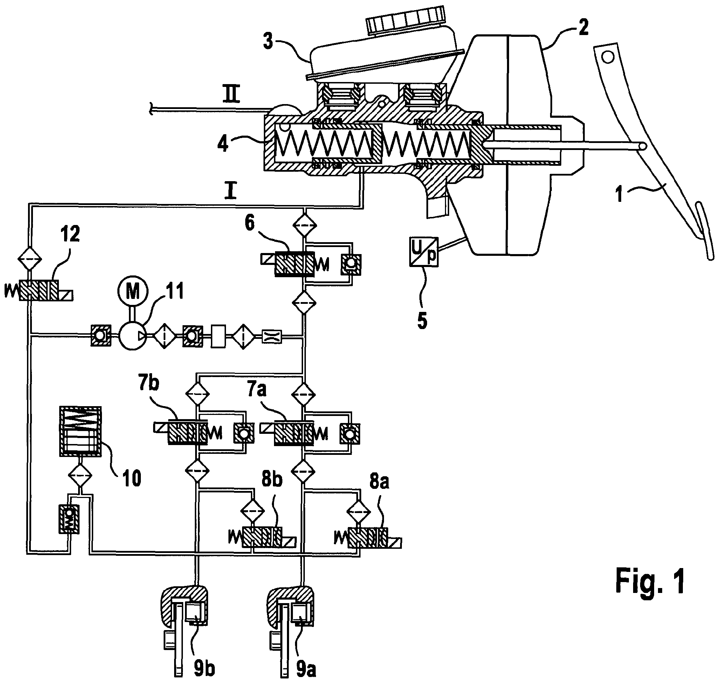

Figur 1 zeigt ein beispielhaftes Bremssystem eines Kraftfahrzeugs, mit dem das erfindungsgemäße Verfahren durchführbar ist. Das vom Fahrer betätigbare Bremspedal 1 wirkt über eine Druckstange überlagert mit einer von Unterdruckbremskraftverstärker 2 aufgebauten Hilfskraft auf (Tandem-) Hauptbremszylinder 4, der in unbetätigtem Zustand mit einem drucklosen Bremsflüssigkeitsvorratsbehälter verbunden ist. Über einen Vakuum- bzw. Drucksensor 5 kann der absolute Druck in der Unterdruckkammer oder der Differenzdruck zur Umgebung gemessen werden. Somit kann überprüft werden, ob ein hinreichender Unterdruck vorhanden ist oder ob eine hydraulische Unterstützung erforderlich ist. Das Bremssystem weist zwei Bremskreise I, II auf, denen (bei einem vierrädrigen Kraftfahrzeug) je zwei Radbremsen zugeordnet sind. Im Folgenden wird nur Bremskreis I beschrieben, der andere Bremskreis II ist identisch aufgebaut. Die Aufteilung der Bremskreise, ob also z.B. je eine Vorderradbremse und eine Hinterradbremse in einem Bremskreis zusammengefasst sind, ist für das erfindungsgemäße Verfahren prinzipiell unerheblich.

Hauptbremszylinder 4 ist über Bremsleitungen mit den Radbremsen 9a, 9b verbunden, wobei durch das Schließen eines ersten Einlassventils 7a die erste Radbremse 9a bzw. mittels eines zweiten Einlassventils 7b die zweite Radbremse 9b von dem Hauptbremszylinder 4 abgetrennt werden können. Der Druck in der ersten bzw. zweiten Radbremse kann durch Öffnen von Auslassventil 8a bzw. 8b verringert werden, indem Bremsflüssigkeit in einen Niederdruckspeicher 10 abgeleitet wird. Eine elektrisch angetriebene Hydraulikpumpe 11 ermöglicht ein Leeren des Niederdruckspeichers 10. Ferner weist das Bremssystem ein auch als Trennventil bezeichnetes analog ansteuerbares Magnetventil 6 auf, welches stromlos offen und zwischen Auslasseite von Hydraulikpumpe 11 und dem Hauptbremszylinder angeordnet ist. Die Saugseite der Hydraulikpumpe 11 ist mit dem Niederdruckspeicher 10 verbunden und kann über ein auch als elektronisches Umschaltventil bekanntes stromlos geschlossenes Magnetventil mit dem Hauptbremszylinder 4 verbunden werden.

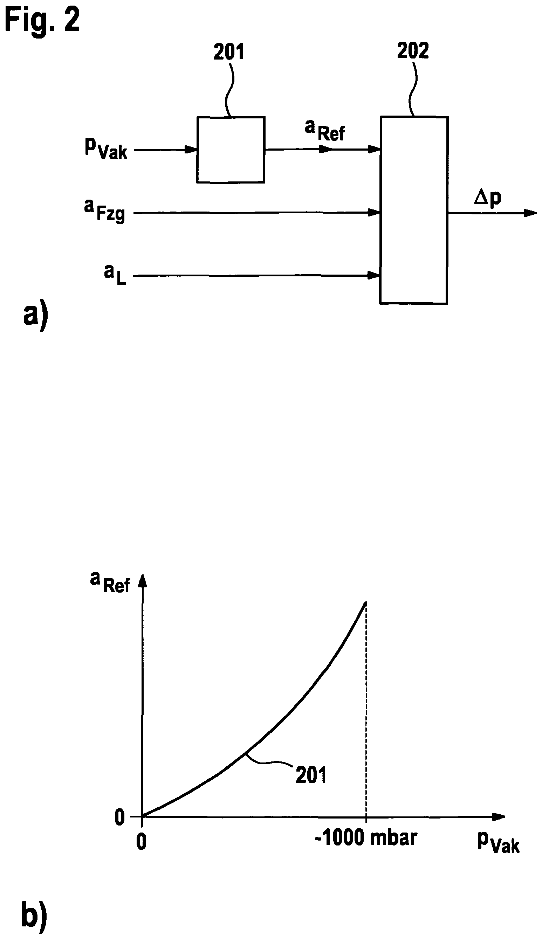

An jedem Rad des Kraftfahrzeugs sind zweckmäßigerweise nicht gezeigte Raddrehzahlsensoren angeordnet, die mit einem ebenfalls nicht gezeigten elektronischen Steuergerät verbunden sind. Wenn die Raddrehzahl eines Rades während einer Bremsung stark abnimmt, kann eine Bremsschlupfregelung bzw. Antiblockierregelung erfolgen, indem das entsprechende Einlassventil geschlossen und durch Öffnen des entsprechenden Auslassventils der Druck in der Radbremse und damit die Bremskraft verringert wird. Die Bremsschlupfregelung kann mittels an sich bekannter Verfahren erfolgen, in denen sich Druckaufbau-, Druckhalte- und Druckabbauphasen zyklisch wiederholen. Das elektronische Steuergerät kann auch eine an sich bekannte Giermomentenregelung bereitstellen, wie diese z.B. in der EP 0 792 229 B1 beschrieben ist. Zweckmäßigerweise ist das elektronische Steuergerät weiterhin mit einem ebenfalls nicht gezeigten Längsbeschleunigungssensors verbunden. Die Ansteuerung des Bremssystems für einen fahrerunabhängigen Druckaufbau wird im Folgenden in Verbindung mit Fig. 2 erläutert.

Figur 2 (a) zeigt schematisch das Vorgehen zum Ermitteln einer gewünschten Druckdifferenz zwischen Hauptbremszylinder und Radbremsen. Als Eingangsgrößen dienen hierbei der vom Vakuumsensor 5 gemessene Druck ρ_{Vak}, die aus Raddrehzahlsensorsignalen ermittelte Fahrzeugverzögerung a_{Fzg} und vorzugsweise die mit einem Längsbeschleunigungssensor gemessene Längsbeschleunigung a_{L}.

Der Schwellenwert für die Verzögerung am Aussteuerpunkt a_{Ref} wird mittels einer Kalibrierkurve 201 aus dem gemessenen Druck in der Unterdruckkammer ermittelt. Die Kalibrierkurve wird zweckmäßigerweise mit einem Testfahrzeug gemessen und in einem Speicher des elektronischen Steuergeräts abgelegt. Beispielsweise können einige Stützstellen gespeichert werden, zwischen denen linear oder polynomiell interpoliert wird. Es kann auch vorgesehen sein, Parameter einer an die Messdaten angepassten Kurve z.B. nach der Methode der kleinsten Fehlerquadrate zu ermitteln und in dem Steuergerät zu speichern. Eine beispielhafte Kalibrierkurve ist als Linie 201 in Figur 2 (b) gezeigt, wobei die Verzögerung a_{Ref} in Abhängigkeit vom gemessenen Unterdruck ρ_{Vak} dargestellt ist. Da der Luftdruck bei üblichen Umgebungsbedingungen etwa 1000 mbar beträgt, steht die volle Verstärkung bis zu einer maximalen Verzögerung bei einem absoluten Druck von etwa 0 bar bzw. einem relativen Druck in der Unterdruckkammer von -1000 mbar zur Verfügung. Wenn der Unterdruck z.B. bei einem Kaltstart des Motors nur 200 mbar beträgt, wird der Aussteuerpunkt des Bremskraftverstärkers bereits bei einer geringeren Verzögerung erreicht.

Betrachtet man die zeitliche Änderung der Signale von Raddrehzahlsensoren, insbesondere von nicht angetriebenen Rädern, so kann daraus die aktuelle Beschleunigung bzw. Verzögerung a_{Fzg} des Fahrzeugs ermittelt werden. Sofern das Kraftfahrzeug einen Längsbeschleunigungssensor aufweist (der z.B. für eine Anfahrhilfe am Berg verwendet wird), kann mit Hilfe von dessen Messwert a_{L} die aktuelle Beschleunigung um den Einfluss einer Längsneigung der Fahrbahn korrigiert werden. Die ggfs. korrigierte aktuelle Verzögerung des Fahrzeugs wird als Hinweis auf den Fahrerbremswunsch interpretiert und mit dem Schwellenwert a_{Ref} verglichen. Übersteigt die aktuelle Verzögerung den Schwellenwert, ist also eine Unterstützung durch die fahrerunabhängige Druckquelle erforderlich, so wird anhand einer vorgegebenen Verstärkungscharakteristik, die zweckmäßigerweise ebenfalls im Speicher des elektronischen Steuergeräts abgelegt ist, eine gewünschte Druckdifferenz Δp ermittelt.

Zur Kompensation der mangelnden Hilfskraftunterstützung durch den Bremskraftverstärker wird also zusätzlich zum Fahrerbremsdruck eine gewünschte Druckdifferenz aufgebaut, indem Trennventil 6 geschlossen, Umschaltventil 12 geöffnet und die Pumpe aktiviert wird (während die Einlassventile 7a, 7b offen und die Auslassventile 8a, 8b geschlossen sind). Hierbei wird Trennventil 6 analog angesteuert, indem die Ansteuerschaltung des Ventils einen Sollstrom nach Maßgabe einer Ventilkennlinie anlegt. Die Ventilkennlinie gibt den Zusammenhang zwischen Ventilstrom eines Magnetventils und maximaler Druckdifferenz an; sie wird zweckmäßigerweise durch eine Vermessung des Ventils bzw. eine Kalibrierung am Bandende in der Fabrik ermittelt und in dem elektronischen Steuergerät gespeichert. Sobald der Druck in den Radbremsen um mehr als die gewünschte Druckdifferenz Δp über dem Druck im Hauptbremszylinder liegt, öffnet das Trennventil. Hinsichtlich weiterer Details zur Überstromregelung bzw. der Ansteuerung des Trennventils, insbesondere möglicher Strategien, wird auf die WO 03/068574 A1 verwiesen.

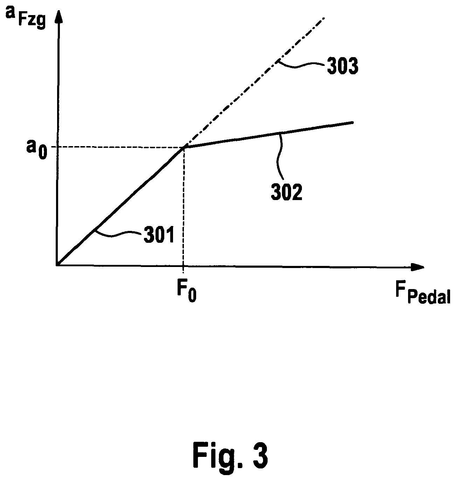

Figur 3 zeigt ein Diagramm des Zusammenhangs zwischen Verzögerung des Fahrzeugs a_{Fzg} und der vom Fahrer aufgebrachten Pedalkraft F_{Pedal}. Wie Linie 301 andeutet, nimmt mit steigender Pedalkraft die Bremsverzögerung linear zu, bis bei einer Pedalkraft Fo die Verzögerung am Aussteuerpunkt a₀ erreicht ist. Ein weiterer Bremsdruckaufbau erfolgt ab nun unverstärkt, d.h. die Steigung von Linie 302 ist deutlich geringer als die Steigung von Linie 301. Dadurch, dass ein fahrerunabhängiger Druckaufbau zur Kompensation der fehlenden Bremskraftunterstützung erfolgt, kann das erfindungsgemäße Verfahren, wie in Linie 303 gezeigt, dem Fahrer ein konsistentes Bremsverhalten auch oberhalb des Aussteuerpunkts bereitstellen. Indem der Druckaufbau mit Hilfe einer Überströmregelung erfolgt, kann auf einen Drucksensor am Hauptbremszylinder verzichtet werden.

## Patentansprüche

1. Verfahren zum Betreiben eines Bremssystems umfassend einen vom Fahrer mit Hilfe eines Bremskraftverstärkers betätigbaren Hauptbremszylinder (4), eine fahrerunabhängige Druckquelle (11), mindestens eine Radbremse (9a, 9b), der ein Raddrehzahlsensor zugeordnet ist, wobei bei einer Bremsung durch den Fahrer, welche insbesondere mittels eines Bremslichtschalters und/oder eines Pedalwegsensors erkannt wird, die aktuelle Fahrzeugverzögerung ermittelt und mit einem vorgegebenen Schwellenwert verglichen wird, und die mindestens eine fahrerunabhängige Druckquelle (11) aktiviert wird, sobald die ermittelte Fahrzeugverzögerung den Schwellenwert erreicht oder überschreitet, **dadurch gekennzeichnet, dass** der vorgegebene Schwellenwert anhand des gemessenen Absolutdrucks in einer Unterdruckkammer des Bremskraftverstärkers oder anhand eines Differenzdrucks zwischen Unterdruckkammer und Umgebung ermittelt wird, wobei insbesond**ere der Zusamm**enhang zwischen gemessenem Absolut- oder Differenzdruck und vorgegebenem Schwellenwert aus einer in einem elektronischen Steuergerät gespeicherten Kennlinie bestimmt wird.

2. Verfahren nach Anspruch 1, **dadurch gekennzeichnet, dass** die aktuelle Fahrzeugverzögerung aus den Signalen mindestens eines Raddrehzahlsensors ermittelt wird.

3. Verfahren nach Anspruch 2, **dadurch gekennzeichnet, dass** das Bremssystem einen Längsbeschleunigungssensor umfasst, und **dass** die Ermittlung der aktuellen Fahrzeugverzögerung zusätzlich eine Korrektur der aus Signalen von Raddrehzahlsensoren ermittelten.Fahrzeugverzögerung um einen durch eine Längsneigung der Fahrbahn verursachten Anteil umfasst.

4. Verfahren nach mindestens einem der Ansprüche 1 bis 3, **dadurch gekennzeichnet, dass** zwischen Hauptbremszylinder (4) und Radbremsen (9a, 9b) ein erstes Magnetventil (6) angeordnet ist, welches insbesondere stromlos geöffnet ist, und dass das erste Magnetventil (6) analog angesteuert werden kann, um einen vorgegebenen Differenzdruck zwischen Hauptbremszylinder (4) und Radbremsen (9a, 9b) aufrecht zu halten.

5. Verfahren nach Anspruch 4, **dadurch gekennzeichnet, dass** die fahrerunabhängige Druckquelle (11) eine elektrische Hydraulikpumpe umfasst, die auslassseitig mit der oder den Radbremsen (9a, 9b) verbunden ist und einlassseitig über ein zweites Magnetventil (12), welches insbesondere stromlos geschlossen ist, mit dem Hauptbremszylinder (4) verbunden werden kann, und dass eine Aktivierung der fahrerunabhängigen Druckquelle (11) ein zumindest teilweises Schließen des ersten Magnetventils (6) und ein Öffnen des zweiten Magnetventils (12) umfasst.

6. Verfahren nach Anspruch 4 oder 5, **dadurch gekennzeichnet, dass** der vorgegebene Differenzdruck zwischen Hauptbremszylinder (4) und Radbremsen (9a, 9b) nach Maßgabe der aktuellen Verzögerung gewählt wird.

7. Bremssystem für ein Kraftfahrzeug, umfassend einen vom Fahrer mit Hilfe eines Bremskraftverstärkers (2) betätigten Hauptbremszylinder (4), eine fahrerunabhängige Druckquelle (11), insbesondere eine elektrische Hydraulikpumpe, mindestens eine Radbremse(9a, 9b), der ein Raddrehzahlsensor zugeordnet ist, **gekennzeichnet durch** ein elektronisches Steuergerät mit einem Speicher und einer Recheneinheit, die ein Verfahren nach mindestens einem der vorhergehenden Ansprüche ausführt.

8. Bremssystem nach Anspruch 7, **dadurch gekennzeichnet, dass** das elektronische Steuergerät mit einem Bremslichtschalter und/oder einem Pedalwegsensor verbunden ist und/oder einen Sensor zur Messung der Längsbeschleunigung aufweist.

9. Bremssystem nach Anspruch 7 oder 8, **dadurch gekennzeichnet, dass** elektronische Steuergerät ein zwischen Hauptbremszylinder (4) und Radbremsen (9a, 9b) angeordnetes erstes Magnetventil (6), welches insbesondere stromlos geöffnet ist, eine elektrische Hydraulikpumpe, die auslassseitig mit der oder den Radbremsen (9a, 9b) verbunden ist, ein zweites Magnetventil (12), über welches die elektrische Hydraulikpumpe auf der Einlassseite mit dem Hauptbremszylinder (4) verbunden werden kann und welches insbesondere stromlos geschlossen ist, sowie eine Ansteuerschaltung für das erste (6) und das zweite (12) Magnetventil umfasst, wobei insbesondere die Ansteuerschaltung für das erste Magnetventil (6) Mittel zur Regelung eines Sollstroms aufweist.

## Claims

1. Method for operating a brake system, comprising a master brake cylinder (4) which can be activated by the driver using a brake booster, a driver-independent pressure source (11), at least one wheel brake (9a, 9b) to which a wheel speed sensor is assigned, wherein in the case of braking by the driver, which braking is detected, in particular, by means of a brake light switch and/or a pedal travel sensor, the current vehicle deceleration is determined and is compared with a predefined threshold value, and the at least one driver-independent pressure source (11) is activated as soon as the determined vehicle deceleration reaches or exceeds the threshold value, **characterized in that** the predefined threshold value is determined on the basis of the measured absolute pressure in an underpressure chamber of the brake booster or on the basis of a differential pressure between the underpressure chamber and the surroundings, wherein in particular the relationship between measured absolute pressure or differential pressure and the predefined threshold value is determined from a characteristic curve stored in an electronic control unit.

2. Method according to Claim 1, **characterized in that** the current vehicle deceleration is determined from the signals of at least one wheel speed sensor.

3. Method according to Claim 2, **characterized in that** the brake system comprises a longitudinal acceleration sensor, and **in that** the determination of the current vehicle deceleration additionally comprises correction of the vehicle deceleration, determined from signals of wheel speed sensors, by an amount which is caused by a longitudinal inclination of the roadway.

4. Method according to at least one of Claims 1 to 3, **characterized in that** a first solenoid valve (6) which is, in particular, opened in a currentless state is arranged between the master brake cylinder (4) and wheel brakes (9a, 9b), and **in that** the first solenoid valve (6) can be actuated in an analogous fashion in order to maintain a predefined differential pressure between the master brake cylinder (4) and wheel brakes (9a, 9b).

5. Method according to Claim 4, **characterized in that** the driver-independent pressure source (11) comprises an electric hydraulic pump which is connected on the outlet side to the wheel brake or brakes (9a, 9b) and can be connected on the inlet side to the master brake cylinder (4) via a second solenoid valve (12) which is, in particular, closed in a currentless state, and **in that** activation of the driver-independent pressure source (11) comprises at least partial closing of the first solenoid valve (6) and opening of the second solenoid valve (12).

6. Method according to Claim 4 or 5, **characterized in that** the predefined differential pressure between the master brake cylinder (4) and wheel brakes (9a, 9b) is selected in accordance with the current deceleration.

7. Brake system for a motor vehicle, comprising a master brake cylinder (4) which is activated by the driver using a brake booster (2), and a driver-independent pressure source (11), in particular an electric hydraulic pump, at least one wheel brake (9a, 9b) to which a wheel speed sensor is assigned, **characterized by** an electronic control unit having a memory and a computing unit which executes a method according to at least one of the preceding claims.

8. Brake system according to Claim 7, **characterized in that** the electronic control unit is linked to a brake light switch and/or a pedal travel sensor and/or has a sensor for measuring the longitudinal acceleration.

9. Brake system according to Claim 7 or 8, **characterized in that** the electronic control unit has a first solenoid valve (6) which is arranged between the master brake cylinder (4) and wheel brakes (9a, 9b) and is, in particular, opened in a currentless state, an electric hydraulic pump which is connected on the outlet side to the wheel brake or brakes (9a, 9b), a second solenoid valve (12) via which the electric hydraulic pump can be connected on the inlet side to the master brake cylinder (4) and which is, in particular, closed in a currentless state, as well as an actuation circuit for the first solenoid valve (6) and the second solenoid valve (12), wherein, in particular, the actuation circuit for the first solenoid valve (6) has means for regulating a setpoint current.

## Revendications

1. Procédé de mise en fonctionnement d'un système de freinage comprenant un maître-cylindre de frein (4) pouvant être actionné par le conducteur à l'aide d'un amplificateur de force de freinage, une source de pression (11) indépendante du conducteur, au moins un frein de roue (9a, 9b) auquel est associé un capteur de vitesse de rotation de roue, dans lequel, lors d'un freinage effectué par le conducteur, qui est notamment détecté au moyen d'un contacteur de feu de freinage et/ou d'un capteur de course de pédale, la décélération réelle du véhicule est déterminée et est comparée à une valeur de seuil prédéterminée, et ladite au moins une source de pression (11) indépendante du conducteur est activée dès que la décélération déterminée du véhicule atteint ou dépasse la valeur de seuil, **caractérisé en ce que** la valeur de seuil prédéterminée est déterminée sur la base de la pression absolue mesurée dans une chambre à vide de l'amplificateur de force de freinage ou sur la base d'une pression différentielle entre la chambre à vide et l'environnement, dans lequel la relation entre la pression absolue ou la pression différentielle et la valeur de seuil prédéterminée est notamment déterminée à partir d'une courbe caractéristique stockée dans un appareil de commande électronique.

2. Procédé selon la revendication 1, **caractérisé en ce que** la décélération réelle du véhicule est déterminée à partir de signaux d'au moins un capteur de vitesse de rotation de roue.

3. Procédé selon la revendication 2, **caractérisé en ce que** le système de freinage comprend un capteur d'accélération longitudinale et **en ce que** la détermination de la décélération réelle du véhicule comprend en outre une correction de la décélération du véhicule déterminée par des capteurs de vitesse de rotation de roues et égale à une fraction due à l'inclinaison longitudinale de la chaussée.

4. Procédé selon au moins l'une des revendications 1 à 3, **caractérisé en ce qu'**une première électrovanne (6) est disposée entre le maître-cylindre de frein (4) et les freins de roues (9a, 9b), qui est notamment ouverte en l'absence de courant, et **en ce que** la première électrovanne (6) peut être commandée de manière analogique afin de maintenir une pression différentielle prédéterminée entre le maître-cylindre de frein (4) et les freins de roues (9a, 9b).

5. Procédé selon la revendication 4, **caractérisé en ce que** la source de pression (11) indépendante du conducteur comprend une pompe hydraulique électrique qui est reliée, côté sortie, au(x) frein(s) de roue(s) (9a, 9b) et qui, côté entrée, peut être reliée par l'intermédiaire d'une seconde électrovanne (12), qui est notamment fermée en l'absence de courant, au maître-cylindre de frein (4), et **en ce qu'**une activation de la source de pression (11) indépendante du conducteur comprend au moins une fermeture partielle de la première électrovanne (6) et une ouverture de la seconde électrovanne (12).

6. Procédé selon la revendication 4 ou 5, **caractérisé en ce que** la pression différentielle prédéterminée entre le maître-cylindre de frein (4) et les freins de roues (9a, 9b) est sélectionnée en fonction de la décélération réelle.

7. Système de freinage destiné à un véhicule automobile, comprenant un maître-cylindre de frein (4) actionné par le conducteur à l'aide d'un amplificateur de force de freinage (2), une source de pression (11) indépendante du conducteur, notamment une pompe hydraulique électrique, au moins un frein de roue (9a, 9b) auquel est associé un capteur de vitesse de rotation de roue, **caractérisé par** un appareil de commande électronique comportant une mémoire et une unité de calcul qui met en oeuvre un procédé selon au moins l'une des revendications précédentes.

8. Système de freinage selon la revendication 7, **caractérisé en ce que** l'appareil de commande électronique est relié à un commutateur de feu de freinage et/ou à un capteur de course de pédale et/ou comporte un capteur destiné à mesurer l'accélération longitudinale.

9. Système de freinage selon la revendication 7 ou 8, **caractérisé en ce que** l'appareil électronique comprend une première électrovanne (6), disposée entre le maitre-cylindre de frein (4) et les freins de roues (9a, 9b), qui est notamment ouverte en l'absence de courant, une pompe hydraulique électrique, qui est reliée, côté sortie, au(x) frein(s) de roue(s) (9a, 9b), une seconde électrovanne (12), par l'intermédiaire de laquelle la pompe hydraulique électrique peut être reliée, côté entrée, au maître-cylindre de frein (4) et qui est notamment fermée en l'absence de courant, ainsi qu'un circuit de commande destiné à la première (6) et à la seconde (12) électrovanne, dans lequel le circuit de commande comporte notamment, pour la première électrovanne (6), des moyens destinés à réguler un courant nominal.
